# EUROPEAN PATENT SPECIFICATION

(11) **EP 2 177 882 B1**
(45) Date of publication and mention of the grant of the patent: **16.03.2016**
(21) Application number: 08167013.5
(22) Date of filing: 20.10.2008
(51) Int. Cl.: G01D 7/04, G01P 1/08, G01D 7/08, B60K 35/00, G01P 1/07

(54) **A display device for a vehicle**
Anzeigevorrichtung für ein Fahrzeug
Dispositif d'affichage pour véhicule

(43) Date of publication of application: 21.04.2010
(73) Proprietor: Volvo Car Corporation, 405 31 Göteborg (SE)
(72) Inventor: Davidsson, Staffan, 426 68 Västra Frölunda (SE); Lindgren, Thomas, 310 58 Vessigebro (SE)
(74) Representative: Zacco Sweden AB

(56) References cited:
- DE-A1- 10 109 905
- GB-A- 2 027 892
- JP-A- 56 043 560
- US-A1- 2001 002 817
- US-A1- 2005 280 521
- US-B2- 7 062 364

## Description

### TECHNICAL FIELD:

The present invention relates to a display device for displaying information relating to the velocity, acceleration and deceleration of a vehicle, according to the preamble of claim 1.

The invention also relates to a method of displaying information relating to the velocity, acceleration and deceleration of a vehicle, according to the preamble of claim 10.

### BACKGROUND ART:

The speed of vehicles may be displayed in various ways. One way is to display the speed with an analogue speedometer device which according to known technology generally comprises a circular scale and a pointer to indicate the instantaneous speed of the vehicle.

An analogue speedometer device will allow a rapid reading of the approximate speed of a vehicle and the change thereof. However, to show the speed in a highly accurate manner, the resolution of the scale must be high, i.e. it will be necessary to design the speedometer with relatively long steps between the speed marks. One problem with this solution is that it makes the analogue speedometer area-consuming, since said circular scale takes up a lot of space on an instrument panel or a control panel straight in front of the driver. In vehicles of today, this area straight in front of the driver is used to display much more than the speed of the vehicle. For example, information relating to the fuel level or the engine speed is normally displayed. Also, information representing the surroundings outside of the vehicle is often displayed. Such information may relate to various parameters, e.g. information about the positions of pedestrians, obstacles in front of the vehicle and similar information.

A further way of displaying the speed of the vehicle is to use a digital speedometer device displaying the speed with digital numbers. This kind of digital speedometer device is suitable for displaying the exact speed of the vehicle. However, one problem with the digital speedometer is that it presents a disadvantage when showing a change of the speed, since the digital numbers will flicker when the speed changes rapidly. Consequently, it will sometimes be difficult to make accurate readings using such a digital speedometer.

Some solutions, combining a speedometer with a display device for displaying acceleration and deceleration has been suggested.

A speedometer according to prior art is for example described in GB 2 027 892, which shows a display device for displaying speed, acceleration and deceleration of a vehicle. The display device has a digital display for indicating the speed with digital numbers and an analogue display adjacent the digital display for indicating the acceleration or deceleration of the vehicle. The analogue display is circular and has two segments, one for indicating acceleration, provided to the left, and another for indicating deceleration, provided to the right. Each segment has several lighting elements which are illuminated depending on the magnitude of the acceleration or deceleration. The analogue display may also be straight and elongated.

One problem with the analogue display displaying acceleration and deceleration according to prior art is that it is area-consuming since it is circular, and another problem is that the digital numbers displaying the speed of the vehicle will flicker when the speed changes rapidly, which sometimes makes it hard for a driver to read the instantaneous speed of the vehicle.

### SUMMARY OF THE INVENTION:

Accordingly, the object of the present invention is to provide a display device for displaying information relating to the velocity, acceleration and deceleration of a vehicle, which display device overcomes the above-mentioned problems associated with prior art and which provides a display device which is small in size and which will display the velocity, acceleration and deceleration of a vehicle in manner which is easy to detect and read for the driver of the vehicle.

The above-mentioned object will be solved by means of the display device as defined in the appended claim 1. Accordingly, the invention relates to a display device for displaying information relating to the velocity, acceleration and deceleration of a vehicle, which display device comprises a scale and an indicator, said scale and said indicator being arranged to cooperate and to simultaneously visualize the velocity and the acceleration or the deceleration of said vehicle, said scale being provided with an numerical series arranged along an imaginary reference line and representing an interval of the velocity of said vehicle, and said indicator being arranged to indicate the instantaneous velocity, the acceleration or the deceleration in cooperation with said scale. Said numerical series within the scale is arranged to scroll along said imaginary reference line when said vehicle is subjected to acceleration or deceleration, which acceleration or deceleration is indicated by said indicator.

The above-mentioned object will also be solved by means of a method for displaying information as defined in the appended claim 10. Accordingly, the invention relates to a method of displaying information relating to the velocity, acceleration and deceleration of a vehicle by means of a display device comprising a scale and an indicator which are arranged to cooperate and to simultaneously visualize the velocity and the acceleration or the deceleration of said vehicle, said scale being provided with an numerical series arranged along an imaginary reference line and representing an interval of the velocity of said vehicle, and said indicator being arranged to indicate the instantaneous velocity, the acceleration or the deceleration in cooperation with said scale. The method comprises scrolling said numerical series along said imaginary reference line during acceleration or deceleration, when said indicator is operated to a maximum position for corresponding acceleration or deceleration; and moving said indicator during acceleration or deceleration.

Consequently, said numerical series within the scale is arranged to scroll along said imaginary reference line when said vehicle is subjected to acceleration or deceleration, which acceleration or deceleration is indicated in a suitable manner by means of said indicator.

According to an embodiment, said numerical series is arranged to be stationary until said vehicle has accelerated or decelerated to such an extent that said indicator has reached a maximum reading towards one of the ends of said scale then said numerical series is arranged to scroll along said imaginary reference line together with said indicator.

In an embodiment said indicator is arranged to move along said scale and towards an end during acceleration and towards a start during deceleration.

According to an embodiment, said indicator is arranged to be inclined with an angle along, and with reference to, said reference line. According to an embodiment of the invention, an angle between 0 and 90 degrees corresponds to acceleration of the vehicle, whereas an angle between 90 and 180 degrees corresponds to deceleration of the vehicle. Furthermore, said indicator is preferably arranged to remain uninclined during constant velocity of the vehicle.

Said indicator is preferably arranged to move along said scale during acceleration or deceleration. Said numeral series is preferably arranged to move along said reference line and said numerical scale is preferably arranged to display a certain part of said numerical scale in a display area at a given instant.

According to various embodiments, said scale means can be elongated and arranged in a horizontal manner, or a circular manner or a vertical manner. Said indicator may be a pointer or an arrow. In an alternative embodiment the indicator can be a movable bar.

According to one embodiment said display device can be arranged to be displayed in an area in line of the sight of the driver, such as on a windscreen of said vehicle.

In one embodiment the angle of the indicator may indicate the size of acceleration or deceleration of the vehicle. This embodiment is preferably arranged so that the smaller angle between the indicator and the imaginary reference line, the greater the acceleration or deceleration of the vehicle. Furthermore, it can be noted that the angle of between zero and 90 degrees corresponds to an acceleration of the vehicle, whereas an angle of between 90 and 180 degrees corresponds to a deceleration of the vehicle. The invention can alternatively be arranged so that any given level of acceleration corresponds to a fixed angle (between zero and 90 degrees, for example 45 degrees) and so that any given level of deceleration corresponds to a further fixed angle (between 90 and 180 degrees, for example 135 degrees).

In one embodiment the length of the indicator above or below the reference line may indicate the size of acceleration or deceleration of the vehicle. In this embodiment the length of the bar with reference to the vertical reference line or the distance of the dot to the vertical reference line is a measure of the acceleration or deceleration. The longer the indicator is or the longer distance the dot has to the vertical reference line, the greater the acceleration or deceleration and the shorter the indicator is or the shorter the distance the dot is provided from the vertical reference line, the lower the deceleration. Furthermore, the method may comprise the steps of operating said indicator in a manner so that it becomes stationary and showing the instantaneous velocity of said vehicle when said acceleration or deceleration is ended; and operating said numerical series in manner so that it becomes stationary when said acceleration or deceleration is ended.

### BRIEF DESCRIPTION OF THE DRAWINGS:

The invention will now be described in detail with reference to the attached figures. It is to be understood that the drawings are designed solely for the purpose of illustration and are not intended as a definition of any limits of the invention, for which reference should be made to the appended claims.

Furthermore, it should be understood that the drawings are not necessarily drawn to scale and that, unless otherwise indicated, they are merely intended to schematically illustrate the structures and procedures described herein.
- Fig. 1: shows a plan view of a display device for a vehicle and according to the invention, in a condition when the vehicle is standing still;
- Fig. 2: shows a plan view of the display device in a condition in which it shows both the velocity and acceleration of the vehicle;
- Fig. 3: shows a plan view of the display device in a condition in which it shows a constant and instantaneous velocity of the vehicle;
- Fig. 4: shows a plan view of the display device in which it shows both a certain velocity and also a certain deceleration of the vehicle;
- Fig. 5: shows a plan view of an alternative embodiment of the display device according to the invention;
- Fig. 6: shows a plan view of an alternative embodiment of the display device, in a condition when the vehicle is standing still;
- Fig. 7: shows a plan view of an alternative embodiment of the display device in a condition in which it shows both the velocity and acceleration of the vehicle;
- Fig. 8: shows a plan view of an alternative embodiment of the display device in a condition in which it shows a constant and instantaneous velocity of the vehicle; and
- Fig. 9: shows a plan view of an alternative embodiment of the display device in which it shows both a certain velocity and also a certain deceleration of the vehicle.

### DETAILED DESCRIPTION OF AN EMBODIMENT:

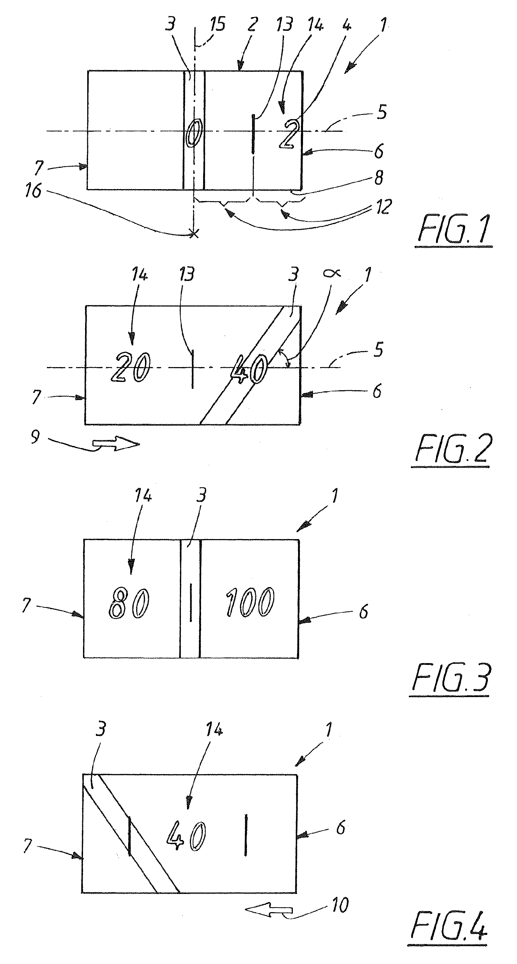

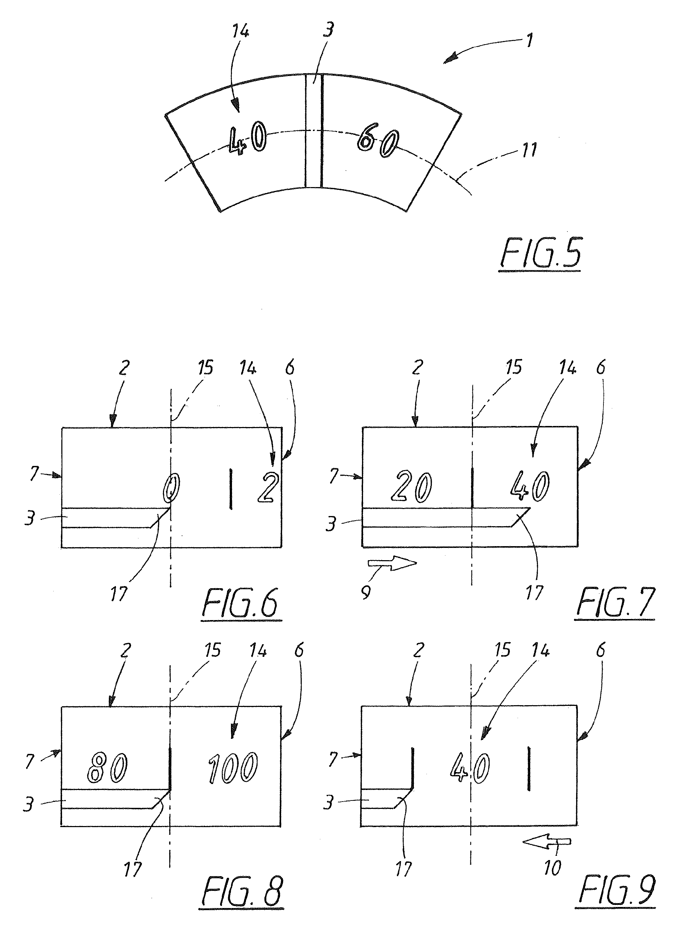

In the following, a display device according to an embodiment of the invention will be described with reference to Figs. 1-4. Furthermore, alternative embodiments of the display device will be described with reference to Fig. 5-9.

Figs. 1-4 show a display device 1 according to the invention, which is intended for displaying information relating to the velocity, and also the acceleration or deceleration, of a vehicle, during different driving scenarios. The display device 1 is preferably arranged in front of a driver of the vehicle, so that he or she may easily read the instantaneous velocity and the acceleration or deceleration of the vehicle without endangering the safety of the vehicle and its occupants.

The display device 1 may be substantially vertically arranged on an instrument panel (not shown) of the vehicle in question, or substantially horizontally arranged on the instrument panel. Alternatively, the display device 1 can be arranged so as to be displayed in an area in line of the sight of the driver such as on a windscreen of the vehicle. The display device, such as an combiner, an head up display etc., can be arranged to project an image onto the windscreen. Thus, the combiner or the head up display presents the information to the driver, without requiring that the driver look away from his or her usual viewpoint.

The display device 1 comprises a scale 2 and an indicator 3, which are arranged to cooperate and to simultaneously visualize the velocity and the acceleration or deceleration of the vehicle to the driver. In one embodiment the scale 2 and the indicator 3 can be digital. This means that the scale 2 and the indicator 3 are implemented as an electronic display unit, for example a LCD display-unit. The electronic display unit may alternatively be a LCD projector-unit which projects an image onto the windscreen.

The invention is not limited to the embodiment in which the scale 2 is and the indicator 3 is digital. The invention can be implemented in a manner in which the scale 2 is either analogue or digital and also the indicator 3 is either analogue or digital. In the embodiment where the scale 2 is analogue and the indicator 3 is digital, the scale 2 is of generally mechanical type and designed as a strip or tape of metal, plastic or other suitable material having printed numerals 4 (such as the notation "20" shown in Fig. 2, indicating a speed of 20 km/h) and being arranged to be displaced along a generally horizontal direction depending on the actual speed of the vehicle. The indicator 3, on the other hand, is preferably digital in the sense that it is implemented as an electronic display unit, for example a LCD display, which is arranged in front of the scale 2 and is also arranged to be displaced along generally the entire width of the indicator 3. Suitably, the display device 1 is arranged so that the indicator 3 is superimposed upon the scale 2.

The scale 2 is provided with a numerical series 14, suitably a series of printed numerals 4, which is arranged to indicate the velocity of the vehicle, as mentioned above. Further, the scale 2 is oriented along a generally horizontal direction and also arranged along an imaginary reference line 5 in the longitudinal direction of the scale 2. The numerical series 14 is preferably arranged to be increasing from the left to the right and is in the total range from 0 km/h to at least the maximum velocity of the vehicle. These numerals 4 are preferably arranged in intervals 12 of 10 km/h, which intervals 12 are constituted by numerals 4 and lines 13 alternately. The intervals 12 may also be indicated by numerals 4 only. Other interval ranges than 10 km/h, which are shown in the drawings, are also possible within the scope of the invention.

At display of the velocity and retardation or acceleration of the vehicle the numerals 4 and the lines 13 are preferably displayed in front of the indicator 3 as shown in the figures. In another embodiment the numerals 4 and the lines may be hidden behind the indicator 3.

The indicator 3 is arranged to indicate both the instantaneous velocity and the acceleration or deceleration of the vehicle on the scale 2 and the movement of the indicator 3 shows how fast or slow the vehicle accelerates and decelerates, respectively. More precisely, during acceleration the indicator 3 is arranged to be inclined towards the end 6 of the scale 2 (as shown in Fig. 2) and to be inclined towards the start 7 of the scale 2 during deceleration (as shown in Fig. 4). In this regard, it should be mentioned that the start 7 of the scale 2 corresponds to the lowest speed indication of the display 1 and that the end 6 of the scale 2 corresponds to the highest speed indication.

With particular reference to Fig. 2 or 4, the inclination of the indicator 3 is defined as a certain angle α as regarded with reference to the imaginary reference line 5. The embodiment is preferably arranged so that the angle α between the indicator 3 and the imaginary reference line 5, indicates an acceleration or deceleration of the vehicle.

When the vehicle has attained the desired velocity after acceleration or deceleration, the indicator 3 is arranged to assume an uninclined (i.e. generally vertical) state and remain uninclined as long as the vehicle is operating at a constant velocity. Suitably, the indicator 3 is displayed in the middle of the elongated numerical number series 14, along a vertical reference line 15, during driving of the vehicle. Further, the indicator 3 may be shaped as a pointer, an arrow etc.

The inclination of the indicator 3 is determined by the position of an imaginary starting point 16, which is positioned at a distance below the scale 2 and in line with the vertical reference line 15.

The numerical series 14 is arranged to be scrolled within the scale 2 during acceleration and deceleration and is further arranged to move along the reference line 5 while a certain part of the numerical series 14 is displayed within a display area 8 at each given instant. The indicator 3 is arranged to move along the numerical series 14 during acceleration or deceleration.

The numerical series 14 is elongated and may be arranged in various ways, e.g. in a horizontal manner, circular manner, vertical manner etc., as regarded by a viewer of the display device 1. The indicator 3 is suitably arranged transversally to the longitudinal direction of the series 14.

Fig. 1 shows the numerical series 14 and the indicator 3 in an uninclined position, wherein the indicator 3 is displaying a velocity of 0 km/h and suitably the indicator 3 is provided along a vertical reference line 15 in the middle of the scale 2 between the start 7 and the end 6. At this state, the numerical series 14 is in a stationary state, and is showing a displayed velocity range of 20 km/h. This displayed velocity range is only serving as an example, and the velocity range may vary within other limits. Another example of the displayed velocity range is +/- 15 km/h from the instantaneous velocity.

Fig. 2 shows the numerical series 14 and the indicator 3, wherein the indicator 3 is moving in a direction towards the end 6 of the scale 2. The movement, or displacement, of the indicator 3 is shown by an arrow 9. In the shown situation, the indicator 3 is displaying the velocity of the vehicle at 40 km/h at the same time as the acceleration is shown by the indicator 3 being inclined to the right so as to define a certain corresponding angle a with regard to the horizontal imaginary reference line 5. During the acceleration, the numerical series 14 is stationary until the vehicle has accelerated to such an extent that the indicator 3 has been inclined to its maximum in the display area 8 and the indicator 3 is thus inclined towards the end 6 of the scale 2. Thereafter, the numerical series 14 is being scrolled along the longitudinal imaginary reference line 5 together with the indicator 3 during the acceleration until the acceleration decreases and the indicator 3 moves back to an uninclined state and assumes a state of constant velocity in the uninclined position, which is shown in Fig. 3.

Fig. 3 shows the numerical series 14 and the indicator 3, where the numerical series 14, in comparison with Fig. 2, has been scrolled in a direction towards the start 7 of the scale 2 during acceleration of the vehicle and displays the velocity range of 80-100 km/h, at the same time as the indicator 3 has followed the scrolling of the scale 14, whereafter the velocity of the vehicle has settled at a constant velocity of 90 km/h. The velocity is displayed by the indicator 3 which is in an uninclined state and provided along the vertical reference line 15. The indicator 3 is maintained in a neutral position when it is positioned along the vertical reference line 15. At the instant when the numerical series 14 has scrolled to such an extent that the acceleration has decreased to zero and the instantaneous displayed velocity is constant, the indicator 3 is positioned in between the start 7 and end 6 of the scale 2.

Fig. 4 shows the numerical series 14 and the indicator 3, which indicator 3 now is moving in a direction towards the start 7 of the numerical series 14 as shown by an arrow 10. The indicator 3 displays the velocity of 30 km/h at the same time as the deceleration is shown by the indicator 3 being inclined to the left. During the deceleration, the numerical series 14 is stationary until the vehicle has accelerated to such an extent that the indicator 3 has been inclined to its maximum in the display area 8 and the indicator 3 is thus inclined towards the start 7 of the scale 2. Thereafter, the numerical series 14 is being scrolled along the longitudinal imaginary reference line 5 together with the indicator 3 towards the end 6 of the scale 2 during the deceleration until the deceleration decreases and the indicator 3 moves back to an uninclined state and assumes a state of constant velocity as represented by an uninclined position, as shown in Fig. 1 and 3.

The scenarios of Figs. 2-4 are repeated during acceleration and deceleration of the vehicle, between various velocities, until the vehicle assumes a velocity of 0 km/h and is stopped, as is shown in Fig. 1. The displayed scale range of the velocity may vary and is dependent upon the available free space of the instrument panel.

Fig. 5 shows an alternative embodiment of the display device 1 according to the invention. The display device 1 is provided with the same features as the embodiment described above in Fig. 1-4. Thus, the main difference is that the scale 14 is circular and has a curved reference line 11.

Fig 6-9 shows an alternative embodiment of the display device 1 according to the invention. In the description below, certain differences as compared to the embodiment described above will be mentioned.

Fig. 6 shows the numerical series 14 and the indicator 3, wherein the indicator 3 is displaying a velocity of 0 km/h. The indicator 3 is provided in the form of a bar or a dot, which is arranged to move along the longitudinal direction of the scale 2. The indicator 3 is arranged to move towards the start 7 of the scale 2 during deceleration and towards the end 6 of the scale during acceleration. The bar comprises a tip 17, which indicates the instantaneous velocity of the vehicle. In Fig. 1 the tip 17 is provided in the area of the vertical reference line 15, which is regarded as a normal position during constant velocity, and in Fig. 1 the velocity corresponding to 0 km/h is shown.

Fig. 7 shows the numerical series and the indicator 3, wherein the indicator 3 is arranged to move in a direction towards the end 6 of the scale 2. The movement of the indicator 2 is shown by an arrow 9. The indicator 3 is arranged to increase in length and to move across the vertical reference line 15 when the vehicle is subjected to acceleration.

At the time when the indicator 3 has reached the end 6 of the scale 2 and the maximum reading of the numerical series 14 at that instant, then the indicator 3 continues to scroll towards the end 6 of the scale 2 simultaneously as the numerical scale 14 starts to move towards the start 7 of the scale, showing higher velocity values. This means that the scale 2 and the indicator 3 will follow each other until the acceleration stops and the velocity of the vehicle becomes constant. Then the numerical series 14 is arranged to stop scrolling and the indicator 3 is arranged to retract until the tip 17 of the indicator 3 has reached the vertical reference line 15, as shown in Fig. 8.

Fig. 8 shows the numerical series 14 and the indicator 3, where the numerical series 14, in comparison with Fig. 7, has been scrolled in the direction towards the start 7 of the scale 2, until the acceleration has stopped. When the acceleration has stopped, the numerical series 14 will scroll until the instantaneous velocity, shown by the numerical series 14, is provided below the vertical reference line 15 simultaneous as the indicator 3 is arranged to retract until the tip coincides with the vertical reference line 15. In Fig. 8 the instantaneous velocity is 90 km/h.

Fig. 9 shows the numerical series 14 and the indicator 3, which is now moving in a direction towards the start 7 of the scale 2, as shown by an arrow 10. The indicator 3 is arranged to decrease in length and to move away from the vertical reference line 15 towards the start 7, when the vehicle is subjected to deceleration. At the time when the indicator 3 has reached the start 7 of the scale 2 and the maximum reading of the numerical series 14 at that instant, the indicator 3 will continue to scroll towards the start 7 of the scale 2 simultaneously as the numerical scale 14 moves towards the end 6 of the scale 2. This means that the scale 2 and the indicator 3 will follow each other until the deceleration stops and the velocity of the vehicle becomes constant or zero, then the numerical series 14 is arranged to stop to scroll to be able to indicate the current instantaneous velocity of the numerical series below the vertical reference line 15 and the indicator 3 is arranged to extend until the tip 17 of the indicator 3 has reached the vertical reference line 15.

The invention is not limited to the above embodiments, but may be varied freely within the scope of the appended claims.

## Claims

1. A display device (1) for displaying information relating to the velocity, acceleration and deceleration of a vehicle, which display device (1) comprises a scale (2) and an indicator (3), said scale (2) being provided with an numerical series (14) arranged along an imaginary reference line (5) and representing an interval of the velocity of said vehicle, **characterized** i n that said indicator (3) being arranged to indicate both the instantaneous velocity and the acceleration or the deceleration in cooperation with said scale (2), wherein said numerical series (14) within the scale (2) is arranged to scroll along said imaginary reference line (5) when said vehicle is subjected to acceleration or deceleration, and wherein said indicator (3) is arranged to move in a direction towards an end (6) during acceleration and towards a start (7) during deceleration or said indicator (3) is arranged to be inclined towards the end (6) of said scale (2) during acceleration and to be inclined towards the start (7) of said scale (2) during deceleration to indicate both instantaneous velocity and the acceleration or the deceleration.

2. A display device (1) according to claim 1, **characterized in that** said numerical series (14) is arranged to be stationary until said vehicle has accelerated or decelerated to such an extent that said indicator (3) has reached a maximum reading towards one of the ends (6, 7) of said scale (2), after which said numerical series (14) is arranged to scroll along said imaginary reference line (5) together with said indicator (3).

3. A display device (1) according to any one of the preceding claims, **characterized in that** said indicator (3) is arranged to be inclined with an angle (a) along, and with reference to, said reference line (5).

4. A display device (1) according to any one of the preceding claims, **characterized in that** said indicator (3) is arranged to remain uninclined during constant velocity.

5. A display device (1) according to any one of the preceding claims, **characterized in that** said numerical series (14) is arranged to be scrolled within the scale (2) while a certain part of said numerical series (14) is visible in a predetermined display area (8) at a given instant.

6. A display device (1) according to any one of the preceding claims, **characterized in that** said scale (2) is elongated and arranged in a generally horizontal, circular or vertical manner.

7. A display device (1) according to any one of the preceding claims, **characterized in that** said indicator (3) is a pointer or arrow.

8. A display device (1) according to any of claims 1 or 2 or 5-7, **characterized in that** said indicator is a movable bar.

9. A display device (1) according to any of the preceding claims, **characterized in that** said display device (1) is arranged to be displayed in an area in line of the sight of the driver, such as on a windscreen of said vehicle.

10. A method of displaying information relating to the velocity, acceleration and deceleration of a vehicle by means of a display device (1) comprising a scale (2) and an indicator (3), said scale (2) being provided with an numerical series (14) arranged along an imaginary reference line (5) and representing an interval of the velocity of said vehicle, **characterized in that** said indicator (3) being arranged to indicate both the instantaneous velocity and the acceleration or the deceleration in cooperation with said scale (2), wherein said method comprises:
scrolling said numerical series (14) along said imaginary reference line (5) during acceleration or deceleration, when said indicator (3) is operated to a maximum position for corresponding acceleration or deceleration; and
moving said indicator (3) during acceleration or deceleration or operating said indicator (3) in a manner so that it becomes inclined towards the end (6) of said scale (2) during acceleration of said vehicle; and
operating said indicator (3) in a manner so that it becomes inclined towards the start (7) of said scale (2) during deceleration of said vehicle.

11. A method according to claim 10, **characterized in that** said method further comprises the steps:
operating said indicator (3) in a manner so that it moves back to a position which coincides with a vertical reference (15) and becomes stationary and showing the instantaneous velocity of said vehicle when said acceleration or deceleration is ended;
operating said numerical series (14) in manner so that it becomes stationary when said acceleration or deceleration is ended.

## Patentansprüche

1. Anzeigevorrichtung (1) zum Anzeigen von Information hinsichtlich der Geschwindigkeit, Beschleunigung und Verlangsamung eines Fahrzeugs, wobei die Anzeigevorrichtung (1) eine Skala (2) und einen Indikator (3) umfasst, wobei die Skala (2) mit einer entlang einer imaginären Referenzlinie (5) angeordneten Zahlenreihe (14) bereitgestellt ist, die ein Intervall der Geschwindigkeit des Fahrzeugs repräsentiert, **dadurch gekennzeichnet, dass** der Indikator (3) dazu ausgebildet ist, sowohl die momentane Geschwindigkeit als auch die Beschleunigung oder Verlangsamung in Zusammenarbeit mit der Skala (2) anzuzeigen, wobei die Zahlenreihe (14) innerhalb der Skala (2) dazu ausgebildet ist, entlang der imaginären Referenzlinie (5) durchzulaufen, wenn das Fahrzeug eine Beschleunigung oder eine Verlangsamung erfährt, und wobei der Indikator (3) dazu ausgebildet ist, sich während einer Beschleunigung in eine Richtung auf ein Ende (6) hin und während in einer Verlangsamung in Richtung auf einen Anfang (7) hin zu bewegen, oder der Indikator (3) dazu ausgebildet ist, sich während der Beschleunigung zum Ende (6) der Skala (2) hin zu neigen und sich während der Verlangsamung zum Anfang (7) der Skala (2) hin zu neigen, um sowohl die momentane Geschwindigkeit als auch die Beschleunigung oder die Verlangsamung anzuzeigen.

2. Anzeigevorrichtung (1) nach Anspruch 1, **dadurch gekennzeichnet, dass** die Zahlenreihe (14) dazu ausgebildet ist, stationär zu sein, bis das Fahrzeug in einem solchen Ausmaß beschleunigt oder verlangsamt hat, dass der Indikator (3) einen Maximalwert zu einem der Enden (6, 7) der Skala (2) hin erreicht hat, wonach die Zahlenreihe (14) dazu ausgebildet ist, gemeinsam mit dem Indikator (3) der imaginären Referenzlinie (5) entlang durchzulaufen.

3. Anzeigevorrichtung (1) nach einem der vorhergehenden Ansprüche, **dadurch gekennzeichnet, dass** der Indikator (3) dazu ausgebildet ist, in einem Winkel (α) entlang der Referenzlinie (5) und bezogen auf diese geneigt zu sein.

4. Anzeigevorrichtung (1) nach einem der vorhergehenden Ansprüche, **dadurch gekennzeichnet, dass** der Indikator (3) dazu ausgebildet ist, bei konstanter Geschwindigkeit ungeneigt zu bleiben.

5. Anzeigevorrichtung (1) nach einem der vorhergehenden Ansprüche, **dadurch gekennzeichnet, dass** die Zahlenreihe (14) dazu ausgebildet ist, innerhalb der Skala (2) durchlaufen gelassen zu werden, während ein gewisser Teil der Zahlenreihe (14) in einem vorbestimmten Anzeigefeld (8) zu einem gegebenen Zeitpunkt sichtbar ist.

6. Anzeigevorrichtung (1) nach einem der vorhergehenden Ansprüche, **dadurch gekennzeichnet, dass** die Skala (2) länglich ist und in einer im Allgemeinen horizontalen, kreisförmigen oder vertikalen Weise angeordnet ist.

7. Anzeigevorrichtung (1) nach einem der vorhergehenden Ansprüche, **dadurch gekennzeichnet, dass** der Indikator (3) ein Zeiger oder ein Pfeil ist.

8. Anzeigevorrichtung (1) nach einem der Ansprüche 1 oder 2 oder 5 - 7, **dadurch gekennzeichnet, dass** der Indikator ein beweglicher Balken ist.

9. Anzeigevorrichtung (1) nach einem der vorhergehenden Ansprüche, **dadurch gekennzeichnet, dass** die Anzeigevorrichtung (1) dazu ausgebildet ist, in einem in der Sichtlinie des Fahrers liegenden Bereich angezeigt zu sein, etwa an einer Windschutzscheibe des Fahrzeugs.

10. Verfahren zum Anzeigen von Information hinsichtlich der Geschwindigkeit, Beschleunigung und Verlangsamung eines Fahrzeugs mithilfe einer Anzeigevorrichtung (1), die eine Skala (2) und einen Indikator (3) umfasst, wobei die Skala (2) mit einer entlang einer imaginären Referenzlinie (5) angeordneten Zahlenreihe (14) bereitgestellt ist, die ein Intervall der Geschwindigkeit des Fahrzeugs repräsentiert, **dadurch gekennzeichnet, dass** der Indikator (3) dazu ausgebildet ist, sowohl die momentane Geschwindigkeit als auch die Beschleunigung oder Verlangsamung des Fahrzeugs in Zusammenarbeit mit der Skala (2) anzuzeigen, wobei das Verfahren Folgendes umfasst:
Durchlaufenlassen der Zahlenreihe (14) entlang der imaginären Referenzlinie (5) während einer Beschleunigung oder Verlangsamung, wenn der Indikator (3) zu einer Maximalposition für die entsprechende Beschleunigung oder Verlangsamung betrieben wird; und
Bewegen des Indikators (3) während der Beschleunigung oder Verlangsamung oder
Betreiben des Indikators (3) auf eine solche Weise, dass er sich während der Beschleunigung des Fahrzeugs zum Ende (6) der Skala (2) hin neigt; und Betreiben des Indikators (3) auf eine solche Weise, dass er sich während der Verlangsamung des Fahrzeugs zum Anfang (7) der Skala (2) hin neigt.

11. Verfahren nach Anspruch 10, **dadurch gekennzeichnet, dass** das Verfahren ferner die Schritte umfasst:
Betreiben des Indikators (3) auf eine solche Weise, dass er sich zurück zu einer Position bewegt, die mit einer vertikalen Referenz (15) übereinstimmt, und stationär wird und die momentane Geschwindigkeit des Fahrzeugs anzeigt, wenn die Beschleunigung oder Verlangsamung aufgehört hat;
Betreiben der Zahlenreihe (14) auf eine solche Weise, dass sie stationär wird, wenn die Beschleunigung oder Verlangsamung aufgehört hat.

## Revendications

1. Dispositif d'affichage (1) pour afficher des informations relatives à la vitesse, l'accélération et la décélération d'un véhicule, lequel dispositif d'affichage (1) comprend une graduation (2) et un indicateur (3), ladite graduation (2) étant dotée d'une série numérique (14) agencée le long d'une ligne de référence imaginaire (5) et représentant un intervalle de la vitesse dudit véhicule, **caractérisé en ce que** ledit indicateur (3) est agencé afin d'indiquer à la fois la vitesse instantanée et l'accélération ou la décélération en coopération avec ladite graduation (2), dans lequel ladite série numérique (14) au sein de la graduation (2) est agencée pour défiler le long de ladite ligne de référence imaginaire (5) lorsque ledit véhicule est soumis à une accélération ou une décélération et dans lequel ledit indicateur (3) est agencé pour se déplacer dans une direction vers une fin (6) pendant l'accélération et vers un début (7) pendant la décélération ou ledit indicateur (3) est agencé pour être incliné vers la fin (6) de ladite graduation (2) pendant l'accélération et pour être incliné vers le début (7) de ladite graduation (2) pendant la décélération, afin d'indiquer à la fois la vitesse instantanée et l'accélération ou la décélération.

2. Dispositif d'affichage (1) selon la revendication 1, **caractérisé en ce que** ladite série numérique (14) est agencée pour être stationnaire jusqu'à ce que ledit véhicule ait accéléré ou décéléré à tel point que ledit indicateur (3) a atteint une lecture maximale vers une des extrémités (6, 7) de ladite graduation (2), après quoi ladite série numérique (14) est agencée pour défiler le long de ladite ligne de référence imaginaire (5) conjointement avec ledit indicateur (3).

3. Dispositif d'affichage (1) selon l'une quelconque des revendications précédentes,
**caractérisé en ce que** ledit indicateur (3) est agencé pour être incliné selon un angle (α) le long de ladite ligne de référence (5) et en faisant référence à celle-ci.

4. Dispositif d'affichage (1) selon l'une quelconque des revendications précédentes, **caractérisé en ce que** ledit indicateur (3) est agencé pour rester non incliné pendant une vitesse constante.

5. Dispositif d'affichage (1) selon l'une quelconque des revendications précédentes, **caractérisé en ce que** ladite série numérique (14) est agencée pour être amenée à défiler au sein de la graduation (2) tandis qu'une certaine partie de ladite série numérique (14) est visible dans une zone d'affichage prédéfinie (8) à un instant donné.

6. Dispositif d'affichage (1) selon l'une quelconque des revendications précédentes, **caractérisé en ce que** ladite graduation (2) est allongée et agencée de manière généralement horizontale, circulaire ou verticale.

7. Dispositif d'affichage (1) selon l'une quelconque des revendications précédentes, **caractérisé en ce que** ledit indicateur (3) est un pointeur ou une flèche.

8. Dispositif d'affichage (1) selon l'une quelconque des revendications 1 ou 2 ou 5 à 7, **caractérisé en ce que** ledit indicateur est une barre mobile.

9. Dispositif d'affichage (1) selon l'une quelconque des revendications précédentes, **caractérisé en ce que** ledit dispositif d'affichage (1) est agencé dans une zone se trouvant dans la ligne de vue du conducteur, comme sur un pare-brise dudit véhicule.

10. Procédé d'affichage d'informations relatives à la vitesse, l'accélération et la décélération d'un véhicule au moyen d'un dispositif d'affichage (1) comprenant une graduation (2) et un indicateur (3), ladite graduation (2) étant dotée d'une série numérique (14) agencée le long d'une ligne de référence imaginaire (5) et représentant un intervalle de la vitesse dudit véhicule, **caractérisé en ce que** ledit indicateur (3) est agencé afin d'indiquer à la fois la vitesse instantanée et l'accélération ou la décélération en coopération avec ladite graduation (2), dans lequel ledit procédé comprend :
faire défiler ladite série numérique (14) le long de ladite ligne de référence imaginaire (5) pendant l'accélération ou la décélération, lorsque ledit indicateur (3) est actionné jusqu'à une position maximale pour l'accélération ou la décélération correspondante ; et
déplacer ledit indicateur (3) pendant l'accélération ou la décélération, ou
actionner ledit indicateur (3) de façon à ce qu'il s'incline vers la fin (6) de ladite graduation (2) pendant l'accélération dudit véhicule ; et actionner ledit indicateur (3) de façon à ce qu'il s'incline vers le début (7) de ladite graduation (2) pendant la décélération dudit véhicule.

11. Procédé selon la revendication 10, **caractérisé en ce que** ledit procédé comprend en outre les étapes suivantes :
actionner ledit indicateur (3) de manière à le déplacer en retour vers une position qui coïncide avec une référence verticale (15) et à le faire devenir stationnaire et le faire afficher la vitesse instantanée dudit véhicule lorsque ladite accélération ou décélération est terminée ;
actionner ladite série numérique (14) de manière à ce qu'elle devienne stationnaire lorsque ladite accélération ou décélération est terminée.
